# EUROPÄISCHE PATENTSCHRIFT

(11) **EP 2 523 774 B1**
(45) Veröffentlichungstag und Bekanntmachung des Hinweises auf die Patenterteilung: **24.12.2014**
(21) Anmeldenummer: 11700333.5
(22) Anmeldetag: 10.01.2011
(51) Int. Cl.: B23K 7/06, B21B 45/00

(54) **VERFAHREN UND VORRICHTUNG ZUR INLINE-OBERFLÄCHENBEHANDLUNG VON BRAMMEN**
METHOD AND DEVICE FOR IN-LINE SURFACE TREATMENT OF SLABS
PROCÉDÉ ET DISPOSITIF DE TRAITEMENT DE SURFACE DE BRAMES EN LIGNE

(30) Priorität: 14.01.2010 DE 102010004563
(43) Veröffentlichungstag der Anmeldung: 21.11.2012
(73) Patentinhaber: SMS Siemag AG, 40237 Düsseldorf (DE)
(72) Erfinder: BILGEN, Christian, 40477 Düsseldorf (DE); BÖCHER, Tilmann, 40489 Düsseldorf (DE); NEUMANN, Luc, 40223 Düsseldorf (DE); GATHMANN, Marcel, 40223 Düsseldorf (DE); KLINKENBERG, Christian, 58313 Herdecke (DE)
(74) Vertreter: Klüppel, Walter
(86) Internationale Anmeldenummer: PCT/EP2011/050196
(87) Internationale Veröffentlichungsnummer: WO 2011/086040

(56) Entgegenhaltungen:
- EP-A2- 1 093 866
- US-A- 2 312 418
- US-A- 2 453 019

## Beschreibung

Die Erfindung betrifft ein Verfahren und eine Vorrichtung zur Verbesserung der Oberflächenqualität durch eine Inline-Oberflächenbehandlung von Brammen, die in einem kontinuierlichen Prozess vom Stranggießen bis zum Warmwalzen, beispielsweise nach dem CSP-Verfahren mit einem zwischen der Gießmaschine und der Warmwalzstraße angeordneten Wärmeofen hergestellt werden. Mit Hilfe einer eine Düse bzw. düsenähnliche Vorrichtungen enthaltenden Oxidationsvorrichtung wird eine oxidierende Flamme bzw. ein oxidierendes Gasgemisch auf die Ober- und Unterseite der Bramme aufgebracht und so gezielt eine definierte Oberflächenschicht der Bramme mit einer Schichtdicke je Brammenseite bis zu 4 mm aufoxidiert; das Oxidationsprodukt auf der Brammenoberfläche kann dabei fest oder flüssig sein.

Ein gattungsgemäßes Verfahren wird in der US 2 453 019 A offenbart. Eine andere Lösung zeigt die US 2 312 418 A.

In Stranggießanlagen, insbesondere in Brammengießanlagen wie beispielsweise CSP-Anlagen werden Gussstränge mit dem Endprodukt nahen Abmessungen erzeugt. Da Brammen mit nur noch wenigen Arbeitsschritten vom Endprodukt entfernt sind, ist eine glatte und fehlerfreie Brammenoberfläche wichtig.

Die auf kontinuierlichen Stranggießanlagen erzeugten Dünn- und Dickbrammen bis zu 400 mm Dicke können nahe und auf der Oberfläche kleine Ungänzen und Gießpulverreste und im oberflächennahen Randbereich Veränderungen der chemischen Zusammensetzung aufweisen.

Ungänzen sind beispielsweise Oszillationsmarken, die aus prozesstechnischen Gründen unvermeidbar sind, und z. B. auch Poren. Chemische Veränderungen der Stahlzusammensetzung im oberflächennahen Randbereich können durch Stoffaustausch zwischen Stahl und Gießpulver aufgrund von Diffusionsvorgängen bei hohen Temperaturen in der Kokille ausgelöst werden. Kleinere Ungänzen, Gießpulverreste und Veränderungen der oberflächennahen chemischen Zusammensetzung werden während des Gieß- und Aufheizprozesses und durch Auswalzen der Bramme weitestgehend entfernt. In ungünstigen Fällen bleiben jedoch "kosmetisch" Oberflächenerscheinungen auf dem gebeizten Warmband sichtbar, z. B. in Form von Oszillationsmarkenschatten.

In der EP 0 867 239 B1 wird ein Verfahren zur Herstellung von Warmbreitband beschrieben, wobei der gegossene Brammenstrang in Abschnitte unterteilt und nach einer Temperaturbehandlung in einem Durchlaufofen ausgewalzt wird. Um die Oberflächenqualität der Brammenabschnitte vor dem Walzen zu verbessern, wird vorgeschlagen, die Temperaturbehandlung eines mangelhaften Brammenabschnitts zu einer Oberflächenbearbeitung durch Schleifen oder Flämmen in einer Oberflächenbearbeitungsvorrichtung zu unterbrechen und die Oberflächenbearbeitung mit einer von der Gießgeschwindigkeit abgekoppelten variablen Geschwindigkeit durchzuführen. Falls erforderlich, wird der Brammenabschnitt zu seiner Oberflächenbearbeitung in ein seitlich neben der Fertigungslinie angeordnetes Segment des Durchlaufofens gefördert.

Ein Verfahren und eine Vorrichtung zur Verbesserung der Oberfläche des Gussstrangs einer vorzugsweisen Brammengießanlage durch eine Inline-Abtragung der Gussstrangoberfläche sind aus der EP 1 093 866 A2 bekannt. Das Abtragen wird nach dem Durchlauf durch einen Wärmeofen kurz vor dem Inline-Walzen des Gussstrangs durchgeführt. Zum Einsatz kommen hierbei Lichtbogen, Laserstrahlen oder mechanische Mittel, vorzugsweise jedoch Heißflämmen mit einer Inline-Flämmmaschine mit oder ohne mechanisches Nacharbeiten der Gussstrangoberfläche. Um eine Nachoxidation oder Sekundärzunderbildung der behandelten Oberfläche zu vermeiden oder zumindest wesentlich zu vermindern, ist es von Vorteil, im Anschluss an das Heißflämmen direkt zu walzen oder den Gussstrang unter Inertgas oder Rauchgas zu halten.

Ausgehend vom geschilderten Stand der Technik liegt der Erfindung die Aufgabe zugrunde, ein Verfahren und eine Vorrichtung zur Inline-Oberflächenbehandlung von in einem kontinuierlichen Verfahren, beispielsweise nach dem CSP-Verfahren hergestellten Brammen zu schaffen, mit der Warmbänder mit hoher Ausbringung und einer exzellenten Oberflächenqualität hergestellt werden können und bei denen die eingangs geschilderten bleibenden "kosmetischen" Obeflächenerscheinungen komplett verhindert werden.

Die gestellte Aufgabe wird mit den kennzeichnenden Merkmalen des Anspruchs 1 dadurch gelöst, dass die Oxidationsbehandlung der Brammenoberfläche mit einer oxidierenden Flamme bzw. mit einem oxidierenden Gasgemisch mit folgenden bearbeitenden Inline-Verfahrensschritten verknüpft ist: vor der Oxidationsbehandlung wird die Brammenoberfläche durch einen Niederdruck- oder Hochdruck-Zunderwäscher von natürlich vorhandenem Zunder befreit, nach der Oxidationsbehandlung wird die erzeugte Oxidschicht sowie der neu gebildete Zunder durch Wasserbenetzungsdüsen oder andere geeignete Medien bzw. Medienaufgabe abgekühlt, durch ein Rollenpaar mechanisch aufgebrochen und durch einen Niederdruck-Zunderwäscher oder einen vorhandenen Hochdruck-Zunderwäscher von der Brammenoberfläche entfernt.

Zur gezielten Erzeugung oxidierter Schichtdicken werden folgende Einstellungen, die einzeln oder in Kombination vorgenommen werden können, durchgeführt:
- Variation des Oxidationspotentials der zur Oxidation der Brammenoberfläche auf diese aufgebrachte Flamme bzw. des aufgebrachten Gasgemisches,
- Variation der Volumenströme der zur Oxidation verwendeten Gase,
- Variation des Oxidationspotentials und/oder der Volumenströme der zur Oxidation verwendeten Gase in Abhängigkeit der Prozessparameter wie beispielsweise Brammentransport -Geschwindigkeit und Stahlgüte,
- Variation des Abstandes und der Winkel der Düsen bzw. der düsenähnlichen Vorrichtungen zur Brammenoberfläche,
- Ausbildung und Anzahl der Düsen bzw. der düsenähnlichen Vorrichtungen.

Die erfindungsgemäße Inline-Oxidationsbehandlung der Brammenoberfläche mit einer oxidierenden Flamme bzw. mit einem oxidierenden Gasgemisch, die auch bei extrem dünnen, als Dünnbrammen bezeichnete Brammen anwendbar ist, ist mit folgenden vor- und nachgeschalteten bearbeitenden Inline-Verfahrensschritten verknüpft:

Vor der Oxidationsbehandlung wird die Brammenoberfläche von natürlich vorhandenem Zunder befreit. Dies geschieht durch einen Zunderwäscher, der im Niederdruck- oder Hochdruckbereich gefahren werden kann.

Nach der Oxidationsbehandlung werden zum Brüchigmachen der gebildeten Schichten (Oxidschicht sowie neu gebildeter Zunder) diese durch Benetzungsdüsen mittels beispielsweise Wasser herunter gekühlt. Durch ein nachfolgendes Rollenpaar werden diese Schichten dann mechanisch aufgebrochen und anschließend durch einen Zunderwäscher entfernt.

In Abhängigkeit von den vorherrschenden Platzverhältnissen kann die Inline-Oberflächenbehandlung der Bramme nach dem Austritt aus der Gießmaschine und vor dem Eintritt in den Wärmeofen oder alternativ nach dem Austritt aus dem Wärmeofen und vor dem Eintritt in die Warmwalzstraße durchgeführt werden. Wenn die Oberflächenbehandlung vor dem Wärmeofen durchgeführt wird, kann zur Entfernung der gebildeten Schichten ein Niederdruckzunderwäscher (Slab Rinser mit Drücken < 100 bar) oder ein Rotorentzunderer eingesetzt werden.

Wenn die Oberflächenbehandlung nach dem Wärmeofen durchgeführt wird, dann kann der vor der Warmwalzstraße vorhandene herkömmliche Hochdruck-Zunderwäscher, der bei hohen Drücken (> 100 bar) betrieben wird, im Anschluss an die Oberflächenbehandlungsvorrichtung verwendet werden. In diesem Fall dient das zum mechanischen Brechen der gebildeten Schichten verwendete Rollenpaar auch als Treiberrollenpaar für den vorhandenen Hochdruck-Zunderwäscher.

Erfindungsgemäß sind alle für die Oberflächenbehandlung erforderlichen Apparaturen und Vorrichtungen mit Vorteil einzeln oder gemeinsam in und aus der Produktionslinie fahrbar ausgebildet, sodass abhängig von Prozessparametern wie beispielweise Stahlsorte, Gießgeschwindigkeit, No-Steady-State Prozesszustände die Oberflächenbehandlung nicht auf die gesamte Produktion, sondern wahlweise auf Produktionsteilmengen beschränkt werden kann.

Weiterhin sind diese Apparaturen und Vorrichtungen neben ihrer Fahrbarkeit so ausgebildet und innerhalb der Produktionslinie so angeordnet, dass die Ober-flächenbehandlung wahlweise über die gesamte Brammenbreite oder gezielt beschränkt auf lokale bzw. isolierte Abschnitte der Brammenbreite oder -länge durchgeführt werden kann.

Nachfolgend werden an Hand von in schematischen Zeichnungsfiguren dargestellten Ausführungsbeispielen weitere Einzelheiten und Vorteile der Erfindung näher erläutert. Es zeigen:
- Figur 1: eine CSP- Produktionslinie mit vor dem Wärmeofen angeordneter Oberflächenbehandlung,
- Figur 2: einen Ausschnitt aus der Fig. 1 mit einer Oberflächenbehandlungsvorrichtung,
- Figur 3: einen Ausschnitt aus der Fig. 1 mit einer alternativen Anordnung der Oberflächenbehandlungsvorrichtung,
- Figur 4: eine CSP- Produktionslinie mit hinter dem Wärmeofen angeordneter Oberflächenbehandlung,
- Figur 5: einen Ausschnitt aus der Fig. 4 mit einer Oberflächenbehandlungsvorrichtung.

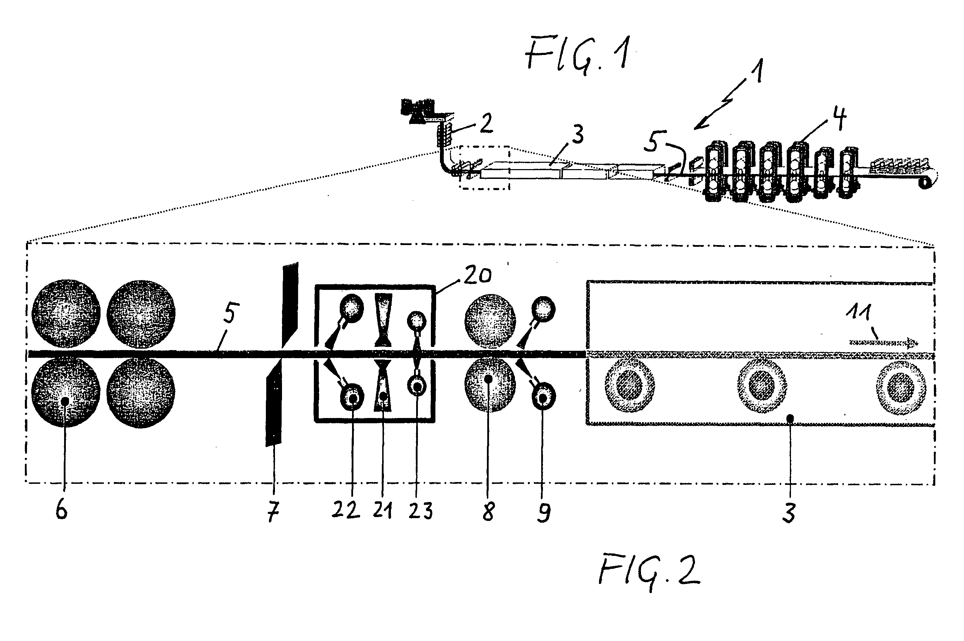

In der Figur 1 ist in einer perspektivischen Ansicht das Anlagenfließbild einer CSP-Produktionslinie 1 mit seinen Hauptanlageteilen, einer CSP-Gießmaschine 2, einem Wärmeofen 3 und einer Warmwalzstraße 4 dargestellt, in der in Produktionsrichtung 11 (in der Zeichnungsfigur von links nach rechts) eine Bramme 5 gegossen, aufgewärmt und dann warmgewalzt wird. In dieses Anlagenfließbild ist der Bereich der CSP-Produktionslinie 1 zwischen der Gießmaschine 2 und dem Wärmeofen 3, in dem die erfindungsgemäße Oberflächenbehandlung durchgeführt wird, gestrichelt hervorgehoben.

Die Figur 2 zeigt entsprechend vergrößert den gestrichelten Bereich der Figur 1 in einer Seitenansicht, beginnend mit den Auslauf-Richttreibern 6 der CSP-Gießmaschine 2 mit einer nachfolgend angeordneten Schere 7 zur Herstellung von Brammen-Teillängen. In Produktionsrichtung 11 hinter der Schere 7 befindet sich die Oberflächenbehandlungsvorrichtung 20, bestehend aus einem Niederdruck- oder Hochdruck-Zunderwäscher 22 zur Entfernung des natürlich vorhandenen Zunders, einer Oxidationsvorrichtung 21 mit Düsen bzw. düsenähnlicher Vorrichtung, mit der eine oxidierende Flamme bzw. ein oxidierendes Gasgemisch gezielt auf die Oberfläche der Bramme 5 aufgebracht wird und Benetzungsdüsen 23 zur Kühlung mit beispielsweise Wasser und zum Brüchigmachen der erzeugten Oxidschichten sowie des neu gebildeten Zunders. In Produktionsrichtung 11 hinter dieser Oberflächenbehandlungsvorrichtung 20 ist ein Rollenpaar 8 angeordnet, dessen Aufgabe das mechanische Aufbrechen der brüchig gemachten Oxidationsprodukte ist, die daran nachfolgend durch einen zusätzlichen Niederdruck-Zunderwäscher 9 von der Brammenoberfläche entfernt werden.

In der Figur 2 ist die Oberflächenbehandlungsvorrichtung 20 als eine geschlossene Einheit schwarz umrandet dargestellt um anzudeuten, dass die Oberflächenbehandlungsvorrichtung 20 als Ganzes aus der Produktionslinie 1 herausgefahren werden kann.

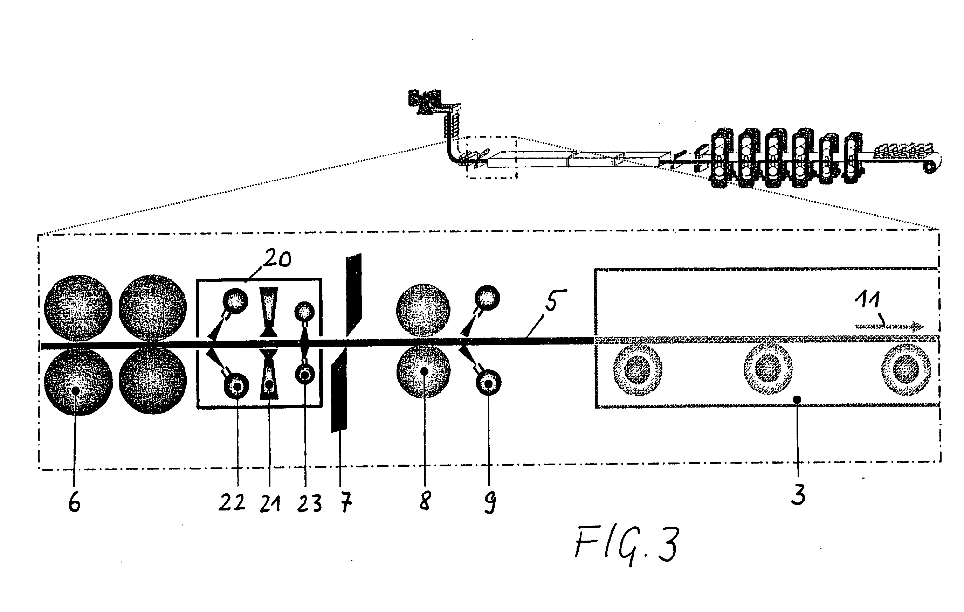

Figur 3 zeigt eine alternative Oberflächenbehandlungsvorrichtung 20 in Produktionsrichtung 11 vor der Schere 7. Gegenüber der Figur 2 bestehen keine weiteren Änderungen, so dass die hier verwendeten Bezugszeichen und die in der Figur 2 beschriebene Durchführung der Oberflächenbehandlung auch für die Figur 3 gültig sind.

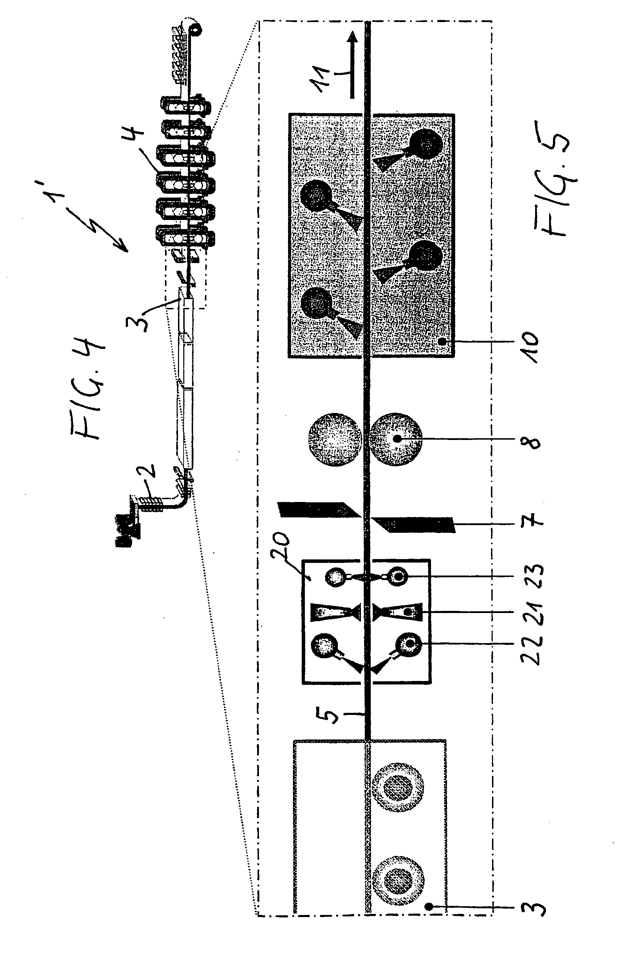

Eine weitere mögliche alternative Verschiebung der Oberflächenbehandlungsvorrichtung 20 ist in den Figuren 4 und 5 dargestellt. In der Figur 4, die eine der Figur 1 entsprechende CSP-Produktionslinie 1' zeigt, ist der Bereich der CSP-Produktionslinie 1' zwischen dem Wärmeofen 3 und der Warmwalzstraße 4 in dem nun die erfindungsgemäße Oberflächenbehandlung durchgeführt wird, gleichfalls gestrichelt hervorgehoben.

In der Figur 5 ist dieser gestrichelte Bereich der Figur 4 in einer Seitenansicht vergrößert dargestellt. Beginnend in der Zeichnungsfigur links mit dem Auslauf des Wärmeofens 3 befindet sich in Produktionsrichtung 11 die Oberflächenbehandlungsvorrichtung 20 zwischen dem Wärmeofen 3 und einer Schere 7. Im Unterschied zu den Figuren 2 und 3 kann bei dieser Anordnung der vor der (in dieser Zeichnungsfigur nicht dargestellten) Warmwalzstraße 4 vorhandene herkömmliche Hochdruck-Zunderwäscher 10 eingesetzt werden, so dass der in den Figuren 2 und 3 verwendete Niederdruck-Zunderwäscher 9 eingespart werden kann. Weiterhin kann mit Vorteil das Rollenpaar 8, das zum mechanischen Aufbrechen der gebildeten Oberflächenschichten benötigt wird, als Treibrollenpaar für den vorhandenen Hochdruck-Zunderwäscher 10 dienen. Von den geschilderten Abweichungen abgesehen, entsprechen die übrigen mit den gleichen Bezugszeichen versehenen Vorrichtungen sowie die Durchführung der Oberflächenbehandlung der Beschreibung zur Zeichnungsfigur 2.

### Bezugszeichenliste

- 1, 1': CSP-Produktionslinie
- 2: CSP-Gießmaschine
- 3: Wärmeofen
- 4: Warmwalzstraße
- 5: Bramme
- 6: Richttreiber der Gießmaschine
- 7: Schere
- 8: Rollenpaar
- 9: Niederdruck-Zunderwäscher
- 10: Hochdruck-Zunderwäscher
- 11: Produktionsrichtung
- 20: Oberflächenbehandlungsvorrichtung
- 21: Oxidationsvorrichtung mit Düsen bzw. düsenähnlicher Vorrichtung
- 22: Niederdruck- oder Hochdruck-Zunderwäscher
- 23: Benetzungsdüsen

## Patentansprüche

1. Verfahren zur Verbesserung der Oberflächenqualität durch eine Inline-Oberflächenbehandlung von Brammen (5), die in einem kontinuierlichen Verfahrensablauf vom Stranggießen bis zum Warmwalzen, beispielsweise nach dem CSP-Verfahren mit einem zwischen der CSP-Gießmaschine (2) und der Warmwalzstraße (4) angeordneten Wärmeofen (3) hergestellt werden, wobei durch eine eine Düse bzw. eine düsenähnliche Vorrichtungen enthaltende Oxidationsvorrichtung (21) auf die Ober- und Unterseite der Bramme (5) aufgebrachte oxidierende Flamme bzw. oxidierendes Gasgemisch gezielt eine definierte Oberflärhenschicht der Bramme (5) mit einer Schichtdicke je Brammenseite bis zu 4 mm aufoxidiert wird; das Oxidationsprodukt auf der Brammenoberfläche kann dabei fest oder flüssig sein,
**dadurch gekennzeichnet,**
**dass** die Oxidationsbehandlung der Brammenoberfläche mit einer oxidierenden Flamme bzw. mit einem oxidierenden Gasgemisch mit folgenden bearbeitenden Inline-Verfahrensschritten verknüpft ist:
- vor der Qxidationsbehandlung wird die Brammenoberfläche durch einen Niederdruck- oder Hochdruck-Zunderwäscher (22) von natürlich vorhandenem Zunder befreit,
- nach der Oxidationsbehandlung wird die erzeugte Oxidschicht sowie der neu gebildete Zunder durch Wasserbenetzungsdüsen (23) oder andere geeignete Medien bzw. Medienaufgabe abgekühlt, durch ein Rollenpaar (8) mechanisch aufgebrochen und durch einen Niederdruck-Zunderwäscher (9) oder einen vorhandenen Hochdruck-Zunderwäscher (10) von der Brammenoberfläche entfernt.

2. Verfahren nach Anspruch 1, **dadurch gekennzeichnet, dass** zur gezielten Erzeugung oxidierter Schichtdicken folgende Einstellungen der Oxidationsvorrichtung (21), die einzeln oder in Kombination vorgenommen werden können, durchgeführt werden:
• Variation des Oxidationspotentials der zur Oxidation der Brammenoberfläche auf diese aufgebrachten Flamme bzw. des aufgebrachten Gasgemisches,
• Variation der Volumenströme der zur Oxidation verwendeten Gase,
• Variation des Oxidationspotentials und/oder der Volumenströme der zur Oxidation verwendeten Gase in Abhängigkeit der Prozessparameter wie beispielsweise Brammentransport-Geschwindigkeit und Stahlgüte,
• Variation des Abstandes und der Winkel der Düsen bzw. der düsenähnlichen Vorrichtungen der Oxidationsvorrichtung (21) zur Brammenoberfläche,
• Ausbildung und Anzahl der Düsen bzw. der düsenähnlichen Vorrichtungen (21).

3. Verfahren nach Anspruch 1 oder 2, **dadurch gekennzeichnet, dass** die Oberflächenbehandlung über die gesamte Brammenbreite durchgeführt wird.

4. Verfahren nach Anspruch 1 oder 2, **dadurch gekennzeichnet, dass** die Oberflächenbehandlung gezielt auf lokale bzw. isolierte Abschnitte der Brammenbreite oder -länge variabel beschränkt durchgeführt wird.

5. Verfahren nach Anspruch 3 oder 4, **dadurch gekennzeichnet, dass** abhängig von Prozessparametern wie beispielweise Stahlsorte, Gießgeschwindigkeit, No-Steady-State Prozesszustände die Oberflächenbehandlung auf Produktionsteilmengen beschränkt wird.

6. Verfahren nach Anspruch 3, 4 oder 5, **dadurch gekennzeichnet, dass** in Abhängigkeit von den vorherrschenden Platzverhältnissen die Oberflächenbehandlung der Bramme (5) inline nach dem Austritt aus der Gießmaschine (2) und vor dem Eintritt in den Wärmeofen (3) oder alternativ nach dem Austritt aus dem Wärmeofen (3) und vor dem Eintritt in die Warmwalzstraße (4) durchgeführt wird.

7. Vorrichtung zur Verbesserung der Oberflächenqualität durch eine Inline-Oberflächenbehandlung von Brammen, die in einem kontinuierlichen Prozess vom Stranggießen bis zum Warmwalzen, beispielsweise nach dem CSP-Verfahren mit einem zwischen der CSP-Gießmaschine (2) und der Warmwalzstraße (4) angeordneten Wärmeofen (3) hergestellt werden, insbesondere zur Durchführung des Verfahrens nach den Ansprüchen 1 bis 6.
**gekennzeichnet durch**
eine Oberflächenbehandlungsvorrichtung (20), enthaltend:
• einen im Nieder- oder Hochdruckbereich betreibbaren Zunderwäscher (22),
• eine eine Düse bzw. düsenähnliche Vorrichtung enthaltende Oxidationsvorrichtung (21) zum Aufbringen einer oxidierenden Flamme bzw. eines oxidierenden Gasgemisches auf die Brammenoberfläche,
• Benetzungsdüsen (23) zur Kühlung und zum Brüchigmachen der **durch** die Düsen bzw. düsenähnliche Vorrichtungen der Oxidationsvorrichtung (21) auf der Brammenoberfläche **durch** Oxidation erzeugten Schichten, sowie ein dieser Oborflächenbehandlungsvorrichtung (20) nachgeordnetes Rollenpaar (8) zum mechanischen Aufbrechen der brüchig gemachten Schichten sowie einen im Nieder- oder Hochdruckbereich betreibbaren Zunderwäscher (9, 10) zur Entfernung der gebrochenen Schichten von der Brammenoberfläche.

8. Vorrichtung nach Anspruch 7, **dadurch gekennzeichnet, dass** alle Apparaturen und Vorrichtungen (21, 22, 23) der Oberflächenbehandlungsvorrichtung (20) sowie alle nachgeordneten Vorrichtungen (8, 9) variabel einzeln oder gemeinsam in die und aus der Produktionslinie fahrbar ausgebildet sind.

9. Vorrichtung nach Anspruch 7 oder 8, **dadurch gekennzeichnet, dass** die zur Oberflächenbehandlung erforderlichen Apparaturen und Vorrichtungen (21, 22, 23, 8, 9) neben ihrer Fahrbarkeit so ausgebildet und innerhalb der Produktionslinie so angeordnet und ausgebildet sind, dass die Oberflächenbehandlung über die gesamte Brammenbreite oder wahlweise gezielt auf lokale bzw. isolierte Abschnitte der Brammenbreite oder -lange durchgeführt werden kann.

## Claims

1. Method of improving surface quality by an in-line surface treatment of slabs (5) produced in a continuous process sequence from continuous casting to hot rolling, for example in accordance with the CSP process with a heating furnace (3) arranged between the CSP casting machine (2) and the hot-rolling train (4), wherein through an oxidising flame or oxidising gas mixture applied to the upper side and lower side of the slab (5) by an oxidation device (21) containing a nozzle or a nozzle-like device a defined surface layer of the slab (5) with a layer thickness per slab side of up to 4 millimetres is selectively oxidised in place, which oxidation product can in that case be solid or liquid on the slab surface,
**characterised in that**
the oxidation treatment of the slab surface is linked with an oxidising plane or with an oxidising gas mixture with the following processing in-line method steps:
- before the oxidation treatment the slab surface is freed by a low-pressure or high-pressure scale washer (22) of naturally present scale and
- after the oxidation treatment the oxide layer produced as well as the newly formed scale are cooled by water wetting nozzles (23) or other suitable media or media feed, mechanically broken up by a roller pair (8) and removed from the slab surface by a low-pressure scale washer (9) or by a high-pressure scale washer (10) which is present.

2. Method according to claim 1, **characterised in that** for selective generation of oxidised layer thicknesses the following settings of the oxidation device (21), which can be undertaken individually or in combination, are carried out:
- variation of the oxidation potential of the flame applied to the slab surface for oxidation thereof or of the applied gas mixture,
- variation of the volume flows of the gases used for the oxidation,
- variation of the oxidation potential and/or the volume flows of the gases, which are used for the oxidation, in dependence on process parameters such as, for example, slab transport speed and steel quality,
- variation of the spacing and the angle of the nozzles or nozzle-like devices of the oxidation device (21) relative to the slab surface,
- construction and number of the nozzles or the nozzle-like devices (21).

3. Method according to claim 1 or 2, **characterised in that** the surface treatment is carried out over the entire slab width.

4. Method according to claim 1 or 2, **characterised in that** the surface treatment is carried out, with variable limitation, selectively on local or isolated sections of the slab width or length.

5. Method according to claim 3 or 4, **characterised in that** the surface treatment is limited to production part quantities in dependence on process parameters such as, for example, steel categories, casting speed, no-steady-state process states.

6. Method according to claim 3, 4 or 5, **characterised in that** the surface treatment of the slab (5) is carried out, depending on prevailing space conditions, in-line after exit from the casting machine (2) and before entry into the heating furnace (3) or alternatively after exit from the heating furnace (3) and before entry into the hot-rolling train (4).

7. Device for improving the surface quality by an in-line surface treatment of slabs, which are produced in a continuous process from continuous casting to hot rolling, for example in accordance with the CSP method with a heating furnace (3) arranged between the CSP casting machine (2) and the hot-rolling train (4), particularly for carrying out the method according to any one of claims 1 to 6,
**characterised by**
a surface treatment device (20) comprising:
- a scale washer (22) operable in the low-pressure or high-pressure range,
- an oxidation device (21), which comprises a nozzle or nozzle-like device, for application of an oxidising flame or an oxidising gas mixture to the slab surface,
- wetting nozzles (23) for cooling and embrittling the layers produced by the nozzles or nozzle-like devices of the oxidation device (21) on the slab surface by oxidation and a roller pair (8), which is downstream of this surface treatment device (20), for mechanical breaking up of the embrittled layers as well as a scale washer (9, 10), which is operable in the low-pressure or high-pressure range, for removal of the broken layers from the slab surface.

8. Device according to claim 7, **characterised in that** all apparatus and devices (21, 22, 23) of the surface treatment device (20) as well as all downstream devices (8, 9) are constructed to be variably movable individually or common into and out of the production line.

9. Device according to claim 7 or 8, **characterised in that** the apparatus and devices (21, 22, 23, 8, 9) required for the surface treatment are so constructed apart from the mobility thereof and so arranged and constructed within the production line that the surface treatment can be carried out over the entire slab width or, selectably, selectively on local or insulated sections of the slab width or length.

## Revendications

1. Procédé pour améliorer la qualité de surface via un traitement de surface en ligne de brames (5) que l'on produit dans un procédé en continu depuis la coulée continue jusqu'au laminage à chaud, par exemple conformément au procédé CSP, un four de réchauffage (3) étant disposé entre la machine de coulée continue (2) et le train de laminage à chaud (4), dans lequel, via un dispositif d'oxydation (21) qui contient une buse, respectivement un dispositif analogue à une buse, on applique sur le côté supérieur et le côté inférieur de la brame (5) une flamme oxydante, respectivement un mélange gazeux oxydant et on procure ainsi de manière ciblée une couche d'oxyde définie à la surface de la brame (5) avec une épaisseur de couche de chaque côté de la brame s'élevant jusqu'à 4 mm, et dans lequel le produit d'oxydation sur la surface de la brame peut être en l'occurrence solide ou liquide ;
**caractérisé en ce que** le traitement par oxydation de la surface de la brame avec une flamme oxydante, respectivement avec un mélange gazeux oxydant est lié aux étapes opératoires de traitement en ligne indiquées ci-après :
- avant le traitement par oxydation, on élimine de la surface de la brame via un dispositif de délaminage (22) travaillant sous basse pression ou sous haute pression, la couche de calamine naturellement présente ;
- après le traitement par oxydation, on refroidit la couche d'oxyde obtenue, ainsi que la couche de calamine nouvellement formée via des buses de mouillage à l'eau (23) ou d'autres milieux appropriés, respectivement d'autres applications de milieux appropriées, on les fracture par voie mécanique en utilisant une paire de cylindres (8) et on les élimine de la surface de la brame via un dispositif de décalaminage sous basse pression (9) ou via un dispositif de décalaminage (10) présent travaillant sous haute pression.

2. Procédé selon la revendication 1, **caractérisé en ce que**, pour l'obtention ciblée d'épaisseurs de couches oxydées, on procède aux réglages suivants concernant le dispositif d'oxydation (21), qui peuvent être prévus de manière individuelle ou en combinaison
- on fait varier le potentiel d'oxydation de la flamme, respectivement du mélange gazeux appliqué sur la surface de la brame à des fins d'oxydation ;
- on fait varier les courants volumiques des gaz utilisés pour l'oxydation ;
- on fait varier le potentiel d'oxydation et/ou les courants volumiques des gaz utilisés pour l'oxydation en fonction des paramètres opératoires comme par exemple la vitesse de transport de la brame et la qualité de l'acier ;
- on fait varier la distance et l'angle des buses, respectivement des dispositifs analogues à des buses du dispositif d'oxydation (21), par rapport à la surface de la brame ;
- on règle la configuration et le nombre des buses, respectivement des dispositifs analogues à des buses (21).

3. Procédé selon la revendication 1 ou 2, **caractérisé en ce qu'**on met en oeuvre le traitement de surface sur toute la largeur de la brame.

4. Procédé selon la revendication 1 ou 2, **caractérisé en ce qu'**on met en oeuvre dans des limites variables le traitement de surface de manière ciblée sur des tronçons locaux, respectivement isolés de la largeur ou de la longueur de la brame.

5. Procédé selon la revendication 3 ou 4, **caractérisé en ce qu'**on limite le traitement de surface à des quantités partielles de production en fonction de paramètres opératoires comme par exemple le type d'acier, la vitesse de coulée, des états opératoires « no-steady-state ».

6. Procédé selon la revendication 3, 4 ou 5, **caractérisé en ce qu'**on met en oeuvre le traitement de surface de la brame (5) en fonction de la place disponible en vigueur, en ligne, après la sortie de la machine de coulée (2) et avant l'entrée dans le four de réchauffage (3) ou en variante après la sortie du four de réchauffage (3) et avant l'entrée dans le train de laminage à chaud (4).

7. Dispositif pour améliorer la qualité de surface via un traitement de surface en ligne de brames que l'on produit dans un procédé en continu depuis la coulée continue jusqu'au laminage à chaud, par exemple conformément au procédé CSP avec un four de réchauffage (3) disposé entre la machine de coulée continue (2) et le train de laminage à chaud (4), en particulier pour la mise en oeuvre du procédé selon des revendications 1 à 6, **caractérisé par** un dispositif de traitement de surface (20) contenant :
- un dispositif de décalaminage (22) qui peut être activé dans la plage des basses pressions ou dans la plage des hautes pressions ;
- un dispositif d'oxydation (21) contenant une buse, respectivement un dispositif analogue à une buse pour l'application d'une flamme oxydante, respectivement d'un mélange gazeux oxydant sur la surface de la brame ;
- des buses de mouillage (23) pour le refroidissement et pour la fragilisation des couches obtenues par oxydation sur la surface de la brame via les buses respectivement les dispositifs analogues à des buses du dispositif d'oxydation (21), ainsi qu'une paire de cylindres (8) montée à la suite de ce dispositif de traitement de surface (20) pour la rupture mécanique des couches fragilisées, et un dispositif de décalaminage (9, 10) qui peut être activé dans la plage des basses pressions ou dans la plage des hautes pressions pour éliminer de la surface de la brame les couches qui ont été rompues.

8. Dispositif selon la revendication 7, **caractérisé en ce que** les appareils et les dispositifs (21, 22, 23) du dispositif de traitement de surface (20), ainsi que tous les dispositifs (8, 9) montés à la suite sont réalisés pour pouvoir entrer et sortir de la ligne de production individuellement ou ensemble de manière variable.

9. Dispositif selon la revendication 7 ou 8, **caractérisé en ce que** les appareils et les dispositifs (21, 22, 23, 8, 9) requis pour le traitement de surface sont réalisés, en plus de leur aptitude au déplacement, et sont disposés et réalisés au sein de la ligne de production, de telle sorte que l'on peut mettre en oeuvre le traitement de surface sur toute la largeur de la brame ou au choix de manière ciblée sur des tronçons locaux, respectivement isolés de la largeur ou de la longueur de la brame.
